# EUROPÄISCHE PATENTSCHRIFT

(11) **EP 0 734 888 B1**
(45) Veröffentlichungstag und Bekanntmachung des Hinweises auf die Patenterteilung: **06.05.1999**
(21) Anmeldenummer: 96103633.2
(22) Anmeldetag: 08.03.1996
(51) Int. Cl.: B60G 15/06

(54) **Oberes Federbeinstützlager für Radaufhängungen in einem Kraftfahrzeug**
Upper strut bearing for motor vehicle suspensions
Fixation supérieure pour jambe de suspension de véhicule à moteur

(30) Priorität: 30.03.1995 DE 19511641
(43) Veröffentlichungstag der Anmeldung: 02.10.1996
(73) Patentinhaber: LEMFÖRDER METALLWAREN AG., 49441 Lemförde (DE)
(72) Erfinder: Siemer, Hubert, 49413 Dinklage (DE)

(56) Entgegenhaltungen:
- EP-A- 0 006 036
- EP-A- 0 065 235
- DE-U- 1 983 947

## Beschreibung

Die Erfindung bezieht sich auf ein oberes Federbeinstützlager für Radaufhängungen in einem Kraftfahrzeug nach dem Oberbegriff des Patentanspruches 1.

Bekannt sind solche Ausbildungsmerkmale aus EP 0 065 235 -A1-. Bei dem bekannten Federbeinstützlager ist der metallische, in der Einbaulage sich etwa horizontal erstreckende Stützflansch mit einer durch Materialverformung gebildeten, nach innen gewölbten und mit ihrem unteren Rand ebenfalls horizontal gerichteten Halsung versehen, die den Tragkörper mit einem gewissen Abstand umgibt, so daß sich im vertikalen Schnitt zwischen diesen beiden Bauteilen ein mit beiden Bauteilen durch Vulkanisation verbundener elastomerer Werkstoff befindet.

Von mehreren Herstellern werden Federbeinstützlager in Kraftfahrzeuge eingebaut, bei denen an der Oberseite des Stützflansches und an der Unterseite eines horizontal gebildeten Halsrandes aus dem elastomeren Werkstoff Gummipuffer mit ringförmigen Anschlagflächen gebildet sind. Eine Anschlagfläche an der Oberseite wirkt gegen eine mit dem Tragkörper verbundene Flanschscheibe, während eine Anschlagfläche an der Unterseite gegen eine Stützscheibe zur Anlage kommt, gegen deren Unterseite sich die Schraubenfeder des Federbeines mit dem Pufferring abstützt. Ähnliche Anordnungen wurden auch durch EP 0 381 560 -B1-, DE-GM 19 83 947 und DE 32 37 363 -A1- offenbart.

Bei den bekannten Federbeinlagern werden sowohl die aus der als Tragfeder wirksamen Schraubenfeder herrührenden Kräfte als auch die vom Dämpfer ausgehenden Kräfte durch die Gummipuffer mit den ringförmigen Anschlagflächen übertragen. Hohe Belastungen erfordern entsprechend bemessene Größen der ringförmigen Anschlagflächen, um die auftretende Flächenpressung in dem elastomeren Werkstoff gering zu halten.

Dementsprechend ist es Aufgabe der Erfindung, bei einem Federbeinlager der Bauart nach dem Oberbegriff des Patentanspruches 1 eine Ausbildung zur Verbesserung der Kraftübertragung durch den elastomeren Werkstoff der Gummipuffer und sein Trägerelement zu schaffen.

Erfindungsgemäß wird diese Aufgabe mit den Merkmalen nach dem Kennzeichen des Patentanspruches 1 gelöst.

Durch diese Ausbildungsmerkmale lassen sich gegenüber herkömmlichen Ausführungsformen größere Anschlagflächen der Gummipuffer realisieren, so daß auch bei hohen Belastungen relativ geringe Flächenpressungen entstehen, wie es angestrebt wird. Über die untere Anschlagfläche des Gummipuffers werden die bei der Einfederung auftretenden Kräfte und über die obere Anschlagfläche des Gummipuffers die bei der Ausfederung auftretenden Kräfte übertragen. Durch die Einkammerung des Werkstoffes des Gummipuffers bleibt sein Volumen bei Belastung konstant und kann nicht durch Verquetschung seitlich ausweichen. Hierbei wird die Eigenschaft des Elastomers genutzt, daß es bei allseitiger Einfassung nicht kompressibel ist. Die Nachgiebigkeiten des oberen und des unteren Anschlagpuffers können somit nahezu gleich gestaltet werden. Das das Elastomer einkammernde ringförmige Bauteil stellt in seiner geometrischen Ausbildung ein nahezu starres Element in der Hauptkraftflußrichtung dar. Des weiteren steht aufgrund der variabel zu gestaltenden Bauhöhe des ringförmigen U-Profils ein geometrisches Konstruktionselement zur Verfügung, welches in der Höhe und in der Breite beliebig variiert werden kann, um dadurch eine Anpassung an unterschiedliche Anwendungsfälle zu ermöglichen. Der eingeschlossene elastomere Werkstoff wird als "totes Material" in Kauf genommen, um die Vorteile der flexiblen Gestaltbarkeit zu erreichen. Die Inkompressibilität des elastomeren Werkstoffes ist dabei die Basis für die Funktionalität der Konstruktion. Der den Tragkörper mit dem Stützflansch verbindende Werkstoff und der Werkstoff des Gummipuffers sind gleich und vorteilhaft einstückig vulkanisiert.

In der Zeichnung sind Ausführungsbeispiele der Erfindung dargestellt. Es zeigen:
- Figur 1: einen vertikalen Schnitt in einer Achsebene,
- Figur 2: einen vertikalen Schnitt einer zu Figur 1 spiegelbildlichen Ausführung,
- Figur 3: eine Draufsicht auf eine Ausbildung nach den Figuren 1 oder 2 und
- Figur 4: einen Schnitt nach der Linie IV - IV in Figur 3.

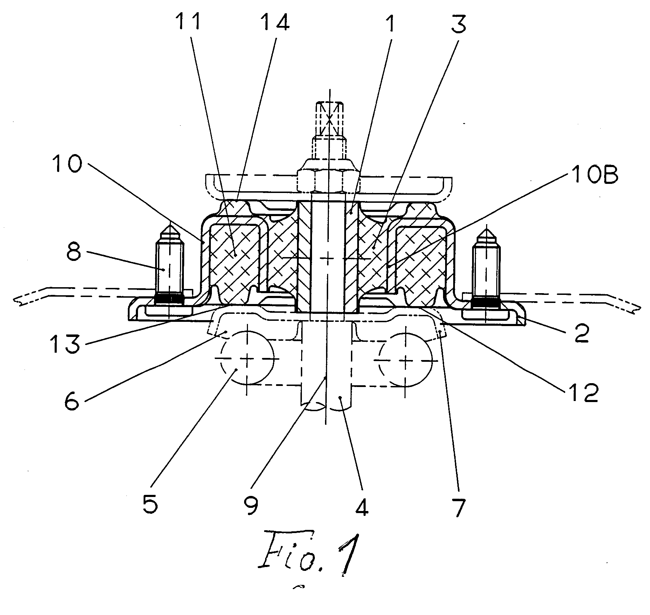

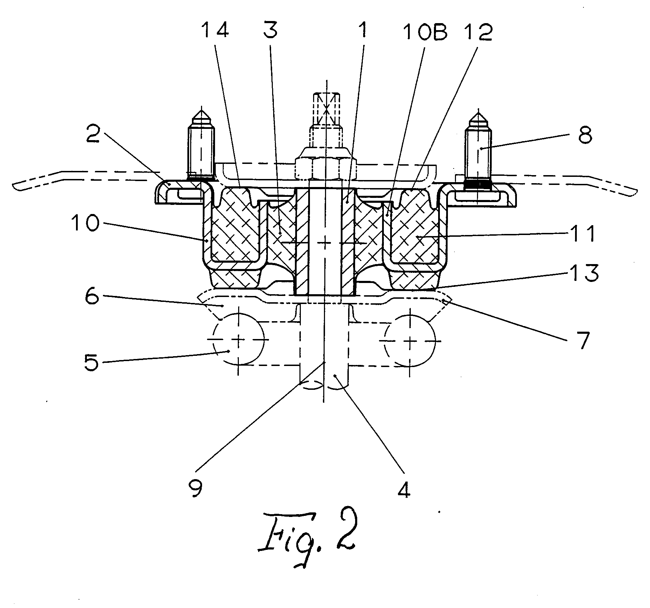

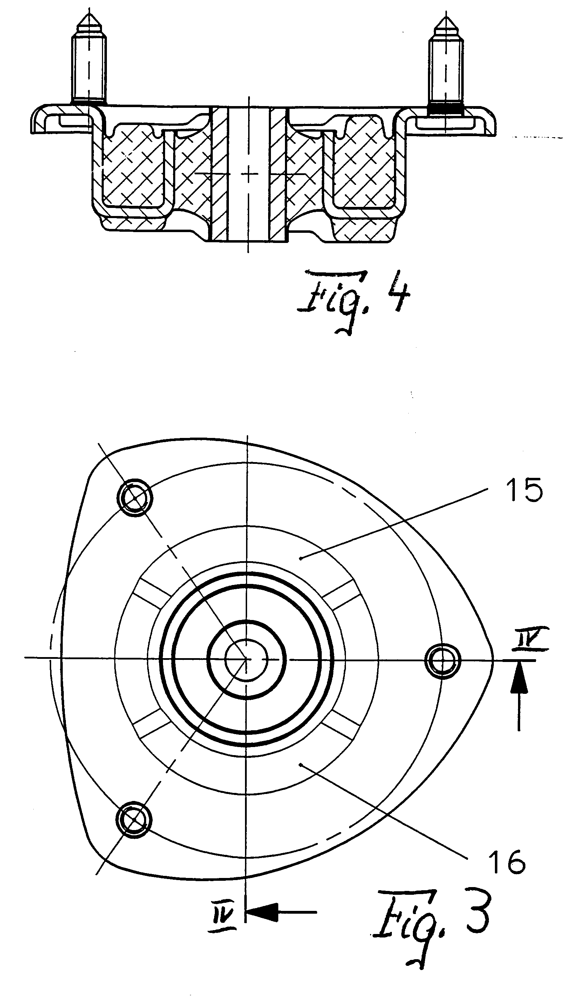

Das obere Federbeinlager nach dem Ausführungsbeispiel besteht aus einem mittigen Tragkörper 1, einem Stützflansch 2 und einem diese miteinander verbindenden elastomeren Werkstoff 3, der mit beiden Bauteilen 1 und 2 durch Vulkanisation festhaftend verbunden ist. Mit dem Tragstück 1 ist der in der Zeichnung nicht näher dargestellte Dämpfer 4 verschraubt, dessen als Tragfeder wirksame Schraubenfeder 5 sich mittels eines Pufferringes 6 aus Gummi oder dergleichen gegen die Unterseite eines zwischen dem Dämpfer 4 und dem Tragstück 1 fest eingespannten Stützscheibe 7 abstützt. Der Stützflansch 2 ist andererseits mittels Schrauben 8 an einem ebenfalls nicht näher dargestellten Kraftfahrzeugteil befestigbar.

Im Anschluß an den sich radial erstreckenden Befestigungsbereich ist der Stützflansch 2 zur Mittelachse 9 des Lagers hin durch Materialverformung mit einem im vertikalen Schnitt ringförmigen, nach oben oder unten offenen U-Profil 10 gestaltet, welches eine wesentliche Menge des Werkstoffes des Gummipuffers 11 aufnimmt, an dem sich eine obere Anschlagfläche 12 und eine untere Anschlagfläche 13 befinden. Die nach oben aus der offenen Seite des U-Profils 10 herausragende Anschlagfläche 12 liegt an einer fest mit dem Tragstück 1 verbundenen Flanschscheibe 14 an. Die untere Anschlagfläche 13 wirkt mit einer ringförmigen Auflagefläche an der Oberseite der Stützscheibe 7 zusammen. Die Breite der Anschlagflächen 12 und 13 kann in Anpassung an die auftretenden Belastungen frei gestaltet und somit ausreichend groß gewählt werden. Des weiteren können die Anschlagflächen mit Aussparungen 15 und 16 ausgestattet sein, um die Nachgiebigkeit in bestimmte Richtungen an die Bedürfnisse anzupassen.

### BEZUGSZEICHENLISTE:

- 1: Tragkörper
- 2: Stützflansch
- 3: Elastomerkörper
- 4: Dämpfer
- 5: Schraubenfeder
- 6: Pufferring
- 7: Stützscheibe
- 8: Schraube
- 9: Längsachse
- 10: U-Profil
- 11: Gummipuffer
- 12: Anschlagfläche
- 13: Anschlagfläche
- 14: Flanschscheibe
- 15: Aussparung
- 16: Aussparung

## Patentansprüche

1. Oberes Federbeinstützlager für Radaufhängungen in einem Kraftfahrzeug, bestehend aus einem mit einem Dämpfer verbindbaren, metallischen Tragkörper (1), einem am Fahrzeugaufbau befestigbaren, metallischen Stützflansch (2), die beide durch einen anvulkanisierten elastomeren Werkstoff (3) miteinander verbunden sind, und aus einem Gummipuffer (11) mit einer unteren Anschlagfläche (13) für eine Stützscheibe (7), gegen deren Unterseite sich eine Schraubenfeder (5) mittels eines Pufferringes (6) abstützt, und einer oberen Anschlagfläche (12) für eine mit dem Tragstück fest verbundene Flanschscheibe (14), dadurch gekennzeichnet, daß der Stützflansch (2) im vertikalen Schnitt einer Ebene, durch die die Längsachse (9) des Federbeinlagers verläuft, ein ringförmiges U-Profil (10) mit einem parallel zur unteren Anschlagfläche (13) liegenden Boden aufweist, welches den Werkstoff des Gummipuffers (11) in seiner wesentlichen Menge an drei Seiten mit einer in Wirkungsrichtung der auftretenden Belastungen offenen Seite kammerartig einschließt.

2. Federbeinstützlager nach Anspruch 1, dadurch gekennzeichnet, daß das ringförmige U-Profil (10) des Stützflansches (2) nach oben offen ausgebildet ist, wobei der aus dieser offenen Seite herausragende Gummipuffer (11) die obere Anschlagfläche bildet und an der Unterseite des u-förmigen Profils ein Gummipuffer mit der unteren Anschlagfläche anvulkanisiert ist.

3. Federbeinstützlager nach den Ansprüchen 1 und 2, dadurch gekennzeichnet, daß der den Tragkörper (1) mit dem Stützflansch (2) verbindende elastomere Werkstoff (3) und der Gummipuffer (11) aus dem gleichen Werkstoff bestehen und einstückig vulkanisiert sind.

## Claims

1. Upper spring-strut support bearing for wheel suspensions in a motor vehicle, consisting of a metallic load-bearing body (1) capable of being connected to a shock-absorber, a metallic support flange (2) capable of being attached to the vehicle bodywork, the two aforementioned components being connected to one another by means of a prevulcanised elastomeric material (3), and of a rubber buffer (11) with a lower stop face (13) for a support disc (7), against the underside of which a helical spring (5) is supported by means of a buffer ring (6), and of an upper stop face (12) for a flanged disc (14) firmly connected to the load-bearing member, characterised in that the support flange (2) comprises, in the vertical section of a plane through which the longitudinal axis (9) of the spring-strut bearing passes, an annular U-profile (10) with a base located parallel to the lower stop face (13), said U-profile including, in the manner of a chamber, the appreciable bulk of the material of the rubber buffer (11) on three sides with one side that is open in the effective direction of the loads that arise.

2. Spring-strut support bearing according to Claim 1, characterised in that the annular U-profile (10) of the support flange (2) is constructed so as to be open in the upward direction, the rubber buffer (11) projecting from this open side constituting the upper stop face and a rubber buffer being prevulcanised with the lower stop face on the underside of the U-shaped profile.

3. Spring-strut support bearing according to Claims 1 and 2, characterised in that the rubber buffer (11) and the elastomeric material (3) connecting the load-bearing body (1) to the support flange (2) consist of the same material and are vulcanised in one piece.

## Revendications

1. Support supérieur de jambe de force à ressort pour des suspensions de roue dans un véhicule automobile, constitué d'un corps de support (1) métallique, pouvant être relié à un amortisseur, d'une bride d'appui métallique, pouvant être fixée sur la carrosserie du véhicule, qui tous deux sont assemblés entre eux par un matériau élastomère (3) rapporté par vulcanisation, et d'un tampon caoutchouc (11) avec une surface de butée inférieure (13) pour un plateau d'appui (7) contre la face inférieure duquel prend appui un ressort hélicoïdal (5), au moyen d'une bague tampon (6), et avec une surface de butée supérieure (12)pour un plateau de bridage (14), solidaire de la pièce de support, caractérisé en ce que la bride d'appui (2) présente, dans la coupe verticale d'un plan, par lequel passe l'axe longitudinal (9) du support de jambe de force, un profilé en U (10) annulaire avec un fond parallèle à la surface de butée inférieure (13), lequel profilé en U enferme à la manière d'une chambre le matériau du tampon caoutchouc (11), dans sa partie principale, sur trois côtés, avec un côté ouvert dans le sens d'action des contraintes qui s'exercent.

2. Support de jambe de force selon la revendication 1, caractérisé en ce que le profilé en U (10) annulaire de la bride d'appui (2) est ouvert vers le haut, le tampon caoutchouc (11) ressortant de ce côté ouvert, formant la surface de butée supérieure et un tampon caoutchouc étant vulcanisé avec la surface de butée inférieure, sur la face inférieure du profilé en U.

3. Support de jambe de force selon les revendications 1 et 2, caractérisé en ce que le matériau élastomère (3), reliant le corps de support (1) à la bride d'appui (2), et le tampon caoutchouc (11) sont faits du même matériau et vulcanisés d'une seule pièce.
